# DEMANDE DE BREVET EUROPEEN

(11) **EP 0 673 599 A1**
(43) Date de publication de la demande: **27.09.1995**
(21) Numéro de dépôt: 95500035.1
(22) Date de dépôt: 23.03.1995
(51) Int. Cl.: A01K 13/00

(54) **Machine automatique pour le lavage, séchage et traitement antiseptique d'animaux**

(71) Demandeur: LEADERCAN, S.L., E-08013 Barcelona (ES)
(72) Inventeur: Romagosa Perez, Miguel, E-08013 Barcelona (ES); Chicote Navalon, Vicente, E-08013 Barcelona (ES)
(74) Mandataire: Manresa Val, Manuel

(57) **Abrégé**

Machine automatique pour le lavage, séchage et traitement antiseptique d'animaux.

Elle est composée d'une cabine (1) pourvue de portes d'entrée (4) et de sortie (3) de l'animal, de sol à grille (5) et de fond incliné (7) avec bouche d'égout (8), ainsi qu'un bâti tubulaire intérieur (9) ayant l'office de rendre rigide la propre cabine (1) et un conduit de projection des liquides de lavage et antiseptiques, et d'une chambre intérieure (12) diffusant l'air de séchage au même animal, et une armoire (14) contenant les organes (15) de programmation et de commande de la propre machine, des turbines d'impulsion de liquides et d'air, des organes chauffants (16) et des doseurs de liquides (17), ladite armoire restant installée à proximité de ladite cabine (1) mais indépendante de celle-ci, et possédant des éléments de branchage au bâti (9) conducteur de liquides et avec la chambre (12) de diffusion d'air de séchage.

## Description

L'objet de la présente invention concerne une machine automatique pour le lavage, séchage et traitement antiseptique d'animaux, expressément conçue pour son application sur des animaux vivants, ce qui représente une nouveauté inconnue sur le marché, à construction et fonctionnement très simples.

En effet, la présente machine est basée sur une cabine dans laquelle sont incorporés de moyens pulvérisateurs d'eau et d'additifs, ainsi que des tuyères de propulsion d'air, tous étant statiques, non mobiles, agissant de loin sur la surface de l'animal, sans possibilité de lui faire mal..

Il est par ailleurs important que lesdits moyens se trouvent placés à l'intérieur d'un réceptacle ou cabine précitée, qui empêche les éclaboussures à l'utilisateur en même temps qu'ils servent pour recueillir les produits utilisés au moyen de rampes et des vidanges ayant des formes simples et sans coins pour leur nettoyage intérieur. Ledit réceptacle étant construit en matières plastiques ou inoxydables capables de résister l'action des produits de lavage, séchage et traitement antiseptique, ainsi que l'action d'agents atmosphériques externes et des coups.

La même machine dispose de cycle indépendant d'auto-lavage pour hygiéniser. Elle utilise également des fluides directs du réseau de consommation (eau et courant), en disposant de moyens de branchement direct aux vidanges et/ou bouches d'égout.

Comme il a été déjà dit auparavant, lesdits moyens sont statiques, fixes, il n'existe pas dans la propre machine des éléments en mouvement capables de faire mal à l'animal traité.

Afin de faciliter l'explication, une description est jointe ainsi qu'une feuille de dessins dans laquelle a été représentée un cas pratique de mise en oeuvre, qui est cité seulement à titre d'exemple non limitatif de l'étendue de la présente invention.

Dans ces dessins:

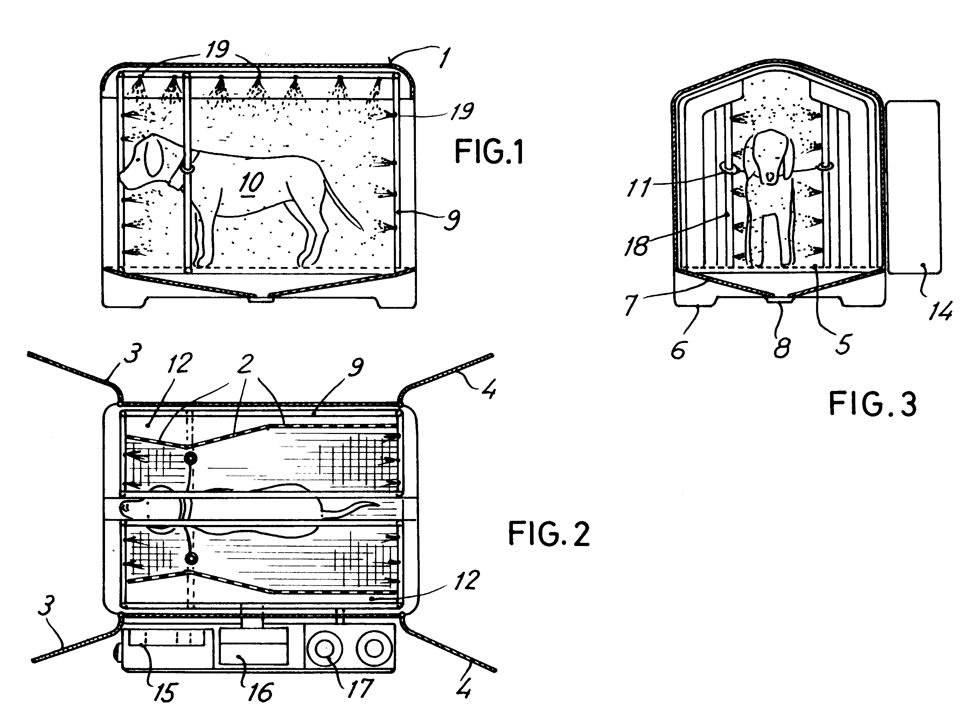

La figure 1 illustre une vue en élévation de l'intérieur de la présente machine.

La figure 2 représente une vue en plan supérieure (sans toit) de cette machine pour le lavage, séchage et traitement antiseptique d'animaux.

Et la figure 3 correspond à une vue de front intérieure de la même machine.

Selon ces figures, la machine automatique objet de la présente invention comporte:
- une cabine de contenance (1) pourvue de portes d'accès latérales (3,4), ladite cabine de contenance disposant de pattes de support (6), sol à grille (5), rampes (7) et bouches d'égout inférieures (8) pour recueillir les liquides et la brancher à des vidanges.
- un bâti tubulaire intérieur (9) qui rend rigide la cabine de contenance (1) et qui, en même temps, est utilisée pour la circulation de liquides de lavages et d'additifs antiseptiques et de rinçage, ainsi que pour retenir de façon contrôlée l'animal (10) par des courroies et des anneaux (11) durant le fonctionnement de la machine.
- des chambres intérieures (12) avec ouvertures (2) diffusant l'air de séchage.
- une armoire (14) avec des séparations pour l'emplacement des ensembles de manoeuvre et le programmateur de fonctionnement (15), des turbines de propulsion d'air et son chauffage (16), et dosage de liquides antiseptiques et de lavage (17) unis aux circuits intérieurs en forme de bâtis et de chambres précités (9,12). Tout cela forme un groupe indépendant de la cabine, facile à remplacer et à entretenir.

Selon cet ensemble d'éléments, son fonctionnement est le suivant: une fois l'animal (10) à laver et à traiter antiseptiquement est introduit, retenu par les colonnes (18) disposées à cette fin et les portes (3,4) d'accès à la cabine sont fermées on peut choisir le cycle au programmateur (15) (évidemment non brevetable) de la machine, avec quoi le processus commence, lequel comprend le dosage au moyen de multiples buses (19) de pulvérisation sur la tête et le corps de l'animal, comprenant le lavage, antiseptique et le rinçage à l'eau tiède (maximum 35^{º}C) et son ultérieur séchage par air chaud (maximum 35^{º}C) c'est-à-dire avec les liquides et les fluides à la température contrôlée pour éviter de faire mal auxdits animaux, avec quoi le processus est terminé; lorsqu'il est fini et les portes (3,4) de la cabine (1) sont fermées, la propre installation (15,16,17) effectue une nouvelle opération de désinfection et de lavage de la propre cabine avant une nouvelle utilisation.

## Revendications

**1.-** Machine automatique pour le lavage, séchage et traitement antiseptique d'animaux, caractérisée en ce qu'elle comprend: une cabine (1) pourvue de portes d'entrée (4) et de sortie (3) de l'animal (10), à sol à grille (5) et fond incliné (7) avec bouche d'égout (8), ainsi qu'un bâti tubulaire intérieur (9) ayant l'office de rendre la propre cabine rigide et un conduit et projection des liquides de lavage et antiseptiques et d'une chambre intérieure (12) diffusant l'air de séchage au même animal; et une armoire (14) contenant les organes (15) de programmation et de commande de la propre machine, turbines d'impulsion de liquides et d'air, organes chauffants (16) et doseurs de liquides (17), ladite armoire (14) restant installée à proximité de ladite cabine (1) mais indépendante de celle-ci, en ayant des éléments de branchage au bâti (9) conducteur de liquides et avec la chambre (12) diffusant de l'air de séchage.

**2.-** Machine selon la revendication 1, caractérisée en ce que ledit bâti (9) est pourvu d'une pluralité de buses (19) de pulvérisation de liquides, fixes, dirigées à la tête et au corps de l'animal (10).

**3.-** Machine selon les revendications précédentes, caractérisée en ce que ledit bâti (9) forme une colonne (18) au moins, pour retenir l'animal en question (10).

**4.-** Machine selon les revendications précédentes, caractérisée en ce que ladite chambre (12) possède une pluralité d'orifices (2) pour la diffusion d'air de séchage.
